Europäisches Patentamt

European Patent Office

Office européen des brevets

(11) Veröffentlichungsnummer: **0 601 407 A1**

## (12) EUROPÄISCHE PATENTANMELDUNG

(21) Anmeldenummer: **93118989.8**

(22) Anmeldetag: **25.11.93**

(51) Int. Cl.5: **C07F 7/02**, C04B 35/58, C08G 79/10, C08G 77/62

(30) Priorität: **08.12.92 DE 4241287**

(43) Veröffentlichungstag der Anmeldung: **15.06.94 Patentblatt 94/24**

(84) Benannte Vertragsstaaten: **DE FR GB IT**

(71) Anmelder: **BAYER AG**

**D-51368 Leverkusen(DE)**

(72) Erfinder: **Baldus, Hans-Peter, Dr.**
**Weidenweg 39**
**D-51399 Burcheid(DE)**
Erfinder: **Wagner, Oliver**
**Alfred-Bucherer-Strasse 99**
**D-53115 Bonn(DE)**
Erfinder: **Jansen, Martin, Prof. Dr.**
**Zur Marterkapelle 93**
**D-53127 Bonn(DE)**

(54) **Siliciumaluminiumnitridkeramik und Vorläuferverbindungen, Verfahren zu ihrer Herstellung sowie deren Verwendung.**

(57) Die vorliegende Erfindung betrifft neue Trichlorsilylaminoalane, neue Alumosilazanverbindungen, neue Oligo- oder Polyalumosilazanverbindungen, die das Strukturmerkmal $\equiv$Si-NH-Al aufweisen, ein Siliciumaluminiumnitridkeramikpulver, keramisches Matrial auf der Basis SiN und AlN, Verfahren zur jeweiligen Herstellung sowie die Verwendung der Polyalumosilazane und der keramischen Materialien.

EP 0 601 407 A1

Die vorliegende Erfindung betrifft neue Trichlorsilylaminoalane, neue Alumosilazanverbindungen, neue Oligo- oder Polyalumosilazanverbindungen, die das Strukturmerkmal $\equiv$Si-NH-Al aufweisen, ein Siliciumaluminiumnitridkeramikpulver, keramisches Matrial auf der Basis SiN und AlN, Verfahren zur jeweiligen Herstellung sowie die Verwendung der Polyalumosilazane und der keramischen Materialien.

Der Werkstoff Siliciumnitrid ist aufgrund seiner Festigkeit und seiner Korrosionsbeständigkeit prinzipiell gut geeignet für Turbolader, Turbinen von Düsentriebwerken sowie Auskleidung von Raketendüsen und Brennkammern.

Durch Herstellung von Mischkeramiken lassen sich darüber hinaus bestimmte Eigenschaften dieses Werkstoffes gemäß seinem späteren Anwendungsbereich optimieren. So werden in der JP-A 63 256 587 Si/Al/N-Keramikschichten offenbart, die im Vergleich zu $Si_3N_4$ verbesserte abrasive Eigenschaften aufweisen.

Die Herstellung von fertigen Bauteilen aus reinem $Si_3N_4$-Keramikpulver ist sehr aufwendig und kompliziert. Nach dem Stand der Technik müssen oxidische Sinteradditive zum Siliciumnitridpulver zugegeben werden, um eine vollständige Verdichtung und Versinterung des Keramikbauteils zu erreichen. Dadurch wiederum entstehen an den Korngrenzen der Siliciumnitridkörner amorphe Glasphasen, die die Hochtemperaturfestigkeit, die Korrosionsbeständigkeit und die Kriechfestigkeit des Bauteils negativ beeinflussen.

In den siebziger Jahren wurde gefunden, daß $Al_2O_3$ sich in $\beta$-$Si_3N_4$ bei hohen Temperaturen löst (K.H. Jack, W.J. Wilson, Nature (Phys. Sci.), 238, 28-29 (1972)). Diese feste Lösung, die als $\beta$-Sialon bekannt ist, erstreckt sich über einen weiten Bereich des Systems $Si_3N_4$-$SiO_2$-$Al_2O_3$-AlN (L.J. Gauckler, H.L. Lucas, G. Petzow, J. Am. Ceram. Soc., 58, 346-47 (1975)). Es wurde festgestellt, daß die Kriech- und Korrosionsfestigkeit von dicht gesinterter Sialonkeramik aufgrund der nicht vorhandenen oder stark reduzierten Glasphase an den Korngrenzen, besser ist als von gesintertem Siliciumnitrid (K.H. Jack, J. Mater. Sci., 11, 1135-58 (1976)). Desweiteren läßt sich Sialonpulver erheblich kostengünstiger zu einem komplexen Formkörper verarbeiten als $Si_3N_4$, weil das Sintern von Sialonpulver zu einem dichten Formkörper schneller und weniger aufwendig ist (T. Ekström, M. Nygren, J. Am. Chem. Soc., 75[2] 259-76 (1992)).

Dicht gesinterte Sialonkeramiken werden in der Regel dadurch hergestellt, daß eine Mischung aus $Si_3N_4$-, $Al_2O_3$- und AlN-Pulver bei ca. 1800 °C unter 0,1 MPa Stickstoffdruck für ca. 12 Stunden gesintert wird. Bei dem Mischvorgang wrden aber immer Verunreinigungen in das Keramikpulver eingebracht, die im fertigen Keramikbauteil häufig die Ursache für das Versagen des Bauteils sind, Außerdem treten trotz sorgfältiger Homogenisierung der Ausgangsmaterialien aufgrund einer statistischen Verteilung der Primärteilchen Inhomogenitäten auf, die erst bei hohen Sintertemperaturen und nach längeren Sinterzeiten abgebaut werden können.

Durch eine absolut homogene Verteilung der einzelnen Elemente Si, Al, N und O schon im Ausgangspulver würde die Zugabe von zusätzlichen Sinteradditiven vermieden und somit auch die damit verbundenen Verunreinigungen. Zusätzlich sollte dadurch der Sintervorgang erheblich beschleunigt werden, und die Sintertemperaturen dürften wesentlich niedriger liegen. Diese drei Faktoren zusammen sollten einerseits zu leistungsfähigeren Sialonbauteilen und andererseits zu ener signifikanten Kostenreduzierung bei deren Herstellung führen.

Daneben dürfte ein homogenes Keramikpulver, das aus Si, Al, N und O zusammengesetzt ist, auch als Sinteradditiv beim Sintern von reinem Siliciumnitrid von Interesse sein.

Desweiteren sollten Keramikpulver mit einer homogenen Verteilung der Elemente Si, Al und N zu $Si_3N_4$/AlN-Nanokompositen mit neuen, interessanten Eigenschaften führen.

Aufgabe dieser Erfindung ist daher die Bereitstellung neuartiger, einfach und in großen Ausbeuten darstellbarer, metallorganischer Vorläuferverbindungen sowie eines Verfahrens zur Herstellung von Keramikpulvern aus diesen Vorläuferverbindungen, die als Si, Al und N bzw. aus Si, Al, N und O bestehen und deren Verunreinigungen an Metallen und Chlor insgesamt unter 500 ppm liegen. Es soll weiterhin eine vollständig homogene Verteilung der beteiligten Elemente gewährleistet sein.

Diese Anforderungen werden erfüllt durch molekulardisperse Keramikpulver, deren Vorläuferverbindungen, den jeweiligen Verfahren zu deren Herstellung sowie der Verwendung von Polyalumosilazanen und der keramischen Materialien, wie sie in ihren bevorzugten Ausführungsformen in den Patentansprüchen offenbart sind.

Überraschenderweise wurde gefunden, daß bei der Umsetzung von 1,1,1-Trichlor-3,3,3-trimethyldisilazan $(CH_3)_3$Si-NH-$SiCl_3$ (A) mit $AlCl_3$ zwei neue Verbindungen gebildet werden und zwar ein $\mu$-N,N'-Bis-(trichlorsilylamino)-bis(dichloralan) $(Cl_3Si-NH-AlCl_2)_2$ (I) und ein Bis(trichlorsilylamino)-chloralan $(Cl_3SiNH)_2$ AlCl ($\mu$-N,N'-II). Diese Molekülverbindungen zeichnen sich durch eine molekulare, Silicium-Stickstoff-Aluminium-Bindung aus.

Die Herstellung der Ausgangsverbindung (A) gelingt in über 90 %iger Ausbeute aus Hexamethyldisilazan und Siliciumtetrachlorid durch Rühren bei Raumtemperatur. Dabei liegt das Molverhältnis von Hexamethyldisilazan zu Siliciumtetrachlorid bevorzugt zwischen 1:10 und 4:1, besonders bevorzugt bei ca. 1:2, Erfindungsgemäß entsteht kristallines (I) in 85 %iger Ausbeute durch Mischen von Verbindung (A) mit $AlCl_3$ in einem inerten organischen Lösungsmittel (n-Hexan, Toluol, Ether). Die Molverhältnisse von Aluminiumtrichlorid zu (A) betragen zwischen 10:1 und 1:10, bevorzugt äquimolar, Die Reaktionstemperatur kann zwischen -100°C und 100°C variieren, der bevorzugte Wert liegt bei ca. 0° - 40°C. Die kristalline Verbindung (I) liegt in zwei Modifikationen vor und ist durch die Kristallstrukturen dieser Modifikationen eindeutig charakterisiert.

Modifikation (A).

Kristallsystem:    tetragonal
Gitterkonstanten:    a = 1770,70 pm   Z = 4, R = 0,0617
                      b = 1770,70 pm   Raumgruppe: $I4_{1/a}$
                      c = 1173,90 pm

$v = 3{,}68062 * 10^9 \text{ pm}^3$

Atomkoordinaten:

| Atom | X/a | Y/b | Z/c |
|---|---|---|---|
| Al | 0,43208 (15) | 0,53086 (15) | 0,03677 (24) |
| Si | 0,46778 (17) | 0,54665 (17) | -0,23654 (27) |
| N | 0,47293 (35) | 0,49777 (36) | -0,10919 (53) |
| H1 | 0,47994 (35) | 0,46073 (36) | -0,03686 (53) |
| C1 | 0,42023 (14) | 0,64831 (14) | 0,04827 (27) |
| C1 | 0,34114 (14) | 0,46419 (17) | 0,08275 (25) |
| C1 | 0,35934 (18) | 0,55843 (23) | -0,27876 (34) |
| C1 | 0,51615 (22) | 0,64793 (17) | -0,22423 (34) |
| C1 | 0,52164 (20) | 0,48518 (21) | -0,35413 (25) |

EP 0 601 407 A1

| Röntgenreflexe des kristallinen Pulvers: | | | |
|---|---|---|---|
| WL 1.54056 | | | |
| SR 1 I | | | |
| 9.820962 | 8.9969 | 23,5 | 0,120 |
| 6.567790 | 13.4705 | 16,2 | 0,060 |
| 6.259745 | 14.1367 | 59.0 | 0.100 |
| 5.270109 | 16.8089 | 16.3 | 0.140 |
| 4.889002 | 18.1298 | 17.4 | 0.140 |
| 4.528325 | 19.5876 | 23.5 | 0.080 |
| 4.056501 | 21.8925 | 20.8 | 0.114 |
| 3.953203 | 22.4719 | 17.5 | 0.100 |
| 3.527854 | 25.2234 | 17.1 | 0.071 |
| 3.501981 | 25.4128 | 100.0 | 0.100 |
| 3.381154 | 26.3370 | 16.1 | 0.160 |
| 3.276878 | 27.1909 | 39.2 | 0.120 |
| 2.982553 | 29.9339 | 18.9 | 0.140 |
| 2.819988 | 31.7036 | 17.4 | 0.140 |
| 2.793576 | 32.0113 | 24.2 | 0.100 |
| 2.690679 | 33.2704 | 26.7 | 0.140 |
| 2.619857 | 34.1971 | 12.5 | 0.114 |
| 2.449430 | 36.6580 | 12.3 | 0.114 |
| 1.891907 | 48.0512 | 9.6 | 0.114 |
| 1.820717 | 50.0564 | 13.7 | 0.114 |

Modifikation (B):

Kristallsystem:      orthorhombisch
Gitterkonstanten:    a = 905,72 pm R = 0,0724 Z = 4
                     b = 1771,37 pm Raumgruppe: Pbca
                     c = 2227,04 pm

$V = 3,57299 * 10^9 \ pm^3$

Atomkoordinaten:

| Atom | X/a | Y/b | Z/c |
|---|---|---|---|
| N1 | -0.10072 (81) | 0.30203 (46) | 0.39040 (32) |
| N2 | 0.10478 (79) | 0.19994 (46) | 0.36127 (32) |
| Al1 | -0.09731 (35) | 0.22017 (21) | 0.33498 (16) |
| C12 | -0.24706 (34) | 0.13823 (20) | 0.36033 (15) |
| C11 | -0.10256 (37) | 0.25354 (21) | 0.24455 (15) |
| Al2 | 0.09833 (35) | 0.27764 (20) | 0.42058 (16) |
| C13 | 0.08688 (35) | 0.23445 (21) | 0.50789 (15) |
| C14 | 0.25567 (35) | 0.35951 (21) | 0.40457 (17) |
| Si1 | 0.17372 (35) | 0.10916 (20) | 0.37146 (15) |
| C15 | 0.16414 (46) | 0.05257 (23) | 0.29505 (18) |
| C16 | 0.38343 (33) | 0.12011 (22) | 0.39867 (16) |
| C17 | 0.05914 (35) | 0.05484 (20) | 0.43377 (16) |
| Si2 | -0.15541 (35) | 0.39338 (20) | 0.37500 (15) |
| C18 | -0.02297 (39) | 0.43488 (20) | 0.31150 (14) |
| C19 | -0.14270 (39) | 0.45814 (20) | 0.44736 (15) |
| C110 | -0.36281 (35) | 0.39020 (22) | 0.34530 (16) |

| Röntgenreflexe des kristallinen Pulvers: | | | |
|---|---|---|---|
| SI 1.54056 SR 1 I | | | |
| 6.537394 | 13.5334 | 100.0 | 0.100 |
| 6.097664 | 14.5144 | 46.4 | 0.120 |
| 5.566283 | 15.9086 | 51.7 | 0.180 |
| 4.823008 | 18.3801 | 35.3 | 0.154 |
| 4,745433 | 18.6832 | 36.4 | 0.154 |
| 4.310358 | 20.5886 | 34.3 | 0.154 |
| 4.078937 | 21.7706 | 24.9 | 0.140 |
| 3.920489 | 22.6619 | 39.5 | 0.140 |
| 3.549396 | 25.0678 | 23.1 | 0.200 |
| 3.504730 | 25.3926 | 30.8 | 0.160 |
| 3.462872 | 25.7047 | 66.4 | 0.140 |
| 3.418085 | 26.0474 | 49.8 | 0.140 |
| 3.310311 | 26.9111 | 34.3 | 0.154 |
| 3.233748 | 27.5607 | 34.5 | 0.154 |
| 3.163951 | 28.1811 | 49.6 | 0.140 |
| 3.136591 | 28.4321 | 24.8 | 0.140 |
| 2.960805 | 30.1590 | 32.7 | 0.154 |
| 2.831757 | 31.5684 | 33.7 | 0.180 |
| 2.653391 | 33.7519 | 26.2 | 0.220 |
| 2.46634 | 36.3949 | 21.0 | 0.154 |

Modifikation A erhält man bei einer Reaktionstemperatur von ca. 0°C, während Modifikation B bevorzugt bei 40°C anfällt.

Zur Synthese von (I) wird das Molverhältnis von (A) zu $AlCl_3$ bevorzugt zwischen 10:1 und 1:1 eingestellt. Trotz eines Überschusses von (A) werden jedoch immer die Verbindungen (I) und (II) zusammen erhalten. Die Reindarstellung der Verbindung (II) gelingt erfindungsgemäß durch Erhitzen der Verbindung (I) bei Temperaturen zwischen 30 und 300°C unter Abspaltung von Aluminiumchlorid. $(Cl_3Si\text{-}NH\text{-}AlCl_2)_2 \rightarrow (Cl_3SiNH)_2AlCl + AlCl_3$. Die Verbindung (II) fällt als weißes Pulver an.

Eine weitere Möglichkeit zur Herstellung der Verbindung II besteht in der Umsetzung von Verbindung (A) mit Aluminiumchlorid in Lösungsmittel bei Temperaturen zwischen 0 und 200°C.

$2 (Cl_3Si\text{-}NH\text{-}Si(CH_3)_3 + AlCl_3 \rightarrow (Cl_3SiNH)_2AlCl + 2 ClSi(CH_3)_3$.

Die so dargestellten Verbindungen (I) und (II) lassen sich auf einfache Weise durch eine Ammonolysereaktion und anschließende Pyrolyse zu einem (Si-N-Al-N)-Keramikpulver umwandeln. Das Verhältnis von Silicium zu Aluminium in den erfindungsgemäßen (Si-N-Al-N)-Keramikpulvern kann man durch Mischen der flüssigen Verbindungen $SiCl_4$ und/oder Hexachlordisilazan, mit (I) und/oder (II) stufenlos von 100:0 (reines Siliciumtetrachlorid) bis hin zu 50:50 (reine Verbindung (I)) einstellen.

Für die Reaktion mit $NH_3$ kann man alle bekannten Ammonolyseverfahren von Siliciumtetrachlorid nutzen; das betrifft die Umsetzung mit festem bzw. flüssigem Ammoniak bei tiefen Temperaturen (US-A 4 196 178), die Reaktion mit gasförmigem Ammoniak in einem organischen Lösungsmittel (US-A 3 959 446) oder die Umsetzung mit $NH_3$ in einer Hochtemperaturreaktion unter Abspaltung von Chlorwasserstoff (US-A 4 145 224).

Nach der Abtrennung des anfallenden Ammoniumchlorids durch bekannte Methoden wie Sublimation oder Waschen mit flüssigem Ammoniak wird ein polymeres Imid erhalten, das noch viele NH- bzw. $NH_2$-Gruppen enthält. Dieses polymere Imid wird anschließend erfindungsgemäß unter einem Stickstoffstrom bei Temperaturen zwischen 600°C und 1450°C, bevorzugt zwischen 950°C und 1400°C kalziniert. Neben Stickstoff können auch Argon, Ammoniak oder andere Inert- oder Reaktionsgase als Kalzinierungsgase Verwendung finden.

Das auf diese Weise dargestellte amorphe keramische Material besteht in den Hauptkomponenten aus Si, N und Al und kann in Spuren auch Cl, H, C und O enthalten. Es weist erfindungsgemäß eine Struktur auf, die aus (N-Si-N-Al-N)-Einheiten besteht, wobei sowohl Silicium als auch Aluminium jeweils tetraedrisch von vier Stickstoffatomen umgeben sind. Elektronenrastermikroskopische Aufnahmen belegen, daß mindestens bis zur lateralen Auflösung von 0,5 $\mu$m eine völlig homogene Elementverteilung vorliegt. Die Kristallisation des amorphen Materials zu einem $Si_3N_4$/AlN-Keramikpulver erfolgt durch Temperaturbehandlung zwischen 1000°C und 1750°C. In dieser Keramik sind $Si_3N_4$- und AlN-Kristallite erfindungsgemäß völlig homogen im Nanometermaßstab verteilt. Die Kristallitgröße der Primärteilchen beträgt im Durchschnitt zwischen 0,01 $\mu$m und 1 $\mu$m. Die Oberfläche des Pulvers beträgt je nach Temperaturbehandlung zwischen 5 und 100 m$^2$/g, bevorzugt zwischen 8 und 30 m$^2$/g.

Durch Sintern dieser Pulver bei Temperaturen von 1450 bis 1800 °C ergeben sich dichte Nanokomposite aus Si$_3$N$_4$ und AlN. Erlaubt man eine oberflächliche Belegung der erfindungsgemäßen Pulver mit Sauerstoff (≦10 %), entstehen bei diesen Temperaturen je nach Sauerstoffbelegungsgrad und Sinterdauer dichte $\alpha$- bzw. $\beta$-Sialonformkörper. Die Sauerstoffanreicherung wird erfindungsgemäß mittels Einwirkung von feuchter Luft bei Temperaturen zwischen 20 und 200 °C über einen Zeitraum zwischen 10 Minuten und 4 Stunden durchgeführt. Pulver die einen Sauerstoffanteil von ca. 8 % aufweisen, sind als Sinterhilfsmittel für die Sinterung von Siliciumnitrid geeignet.

Durch Umsetzung der Verbindungen (I) und (II) mit primären oder sekundären Alkyl- bzw. aromatischen Aminen wie z.B. Methylamin, Ethylamin, Dimethylamin oder Anilin lassen sich monomere oder oligomere Reaktionsprodukte der Formel [(NR)$_x$Cl$_y$Si-NH-Al(NR')$_x$Cl$_y$-]$_z$(XXY = 5, X = 3-5) erhalten, dabei können R und R' gleich oder verschieden sein und aus C$_1$-C$_6$-Alkyl, Wasserstoff, Phenyl oder Vinyl bestehen. Die oligomeren Einheiten können anschließend durch eine Temperaturbehandlung oder durch Vernetzung mit Ammoniak zu Polymeren umgewandelt werden.

Die Konsistenz der so entstandenen Polyalumosilazane reicht je nach Rest R, R' oder Polymerisationsgrad von leicht viskos über harz- bzw. wachsartig bis hin zum festen Zustand.

Die thermische Vernetzung erfolgt durch Abspaltung von einem Aminrest unter Knüpfung von neuen Si-N-Al-N-, Si-N-Si-N- oder Al-N-Al-N-Bindungen. Die Vernetzung mittels Ammoniak erfolgt durch Substitution einer NRR'-Gruppe oder einer NR-Gruppe durch eine NH$_2$- oder eine NH-Gruppe, die dann weiter vernetzt. Beide Reaktionen können sowohl in offenen Systemen als auch in geschlossenen Systemen erfolgen (Autoklav). Die Polymerisationstemperatur liegt zwischen -20 °C und +300 °C, die Polymerisationsdauer zwischen 5 Minuten und 10 Tagen.

Gegenstand dieser Erfindung ist weiterhin die Verwendung der erfindungsgemäßen Polyalumosilazane zur Herstellung von keramischem Material durch Pyrolyse in inerter oder NH$_3$-haltiger Atmosphäre bei Temperaturen von 800 bis 1800 °C.

Die keramischen Ausbeuten der Pyrolysen betragen zwischen 65 % und 80 %.

Das Pyrolyseprodukt ist ein keramisches Material, das zu über 95 % aus den Elementen Si, Al, N und C besteht. Es kann amorph oder kristallin anfallen. Die kristallinen Phasen beinhalten Si$_3$N$_4$, AlN, SiC und bei Anwesenheit von Sauerstoff $\alpha$- bzw. $\beta$-Sialon. Da die erfindungsgemäßen Polyalumosilazane in einer Vielzahl von organischen Lösungsmitteln löslich sowie schmelzbar sind, lassen sie sich in Form einer Lösung bzw. Schmelze zu geeigneten Halbzeugen oder Formkörpern wie z.B. Fasern, Folien oder Beschichtungen verarbeiten. Die hochviskosen bis wachsartigen Polyalumosilazane können außerdem auch direkt zu geeigneten Formkörpern gesponnen oder gepreßt werden.

Die so erhaltenen Formkörper können vor einer Pyrolyse einer physikalischen oder chemischen (Härtung, Vernetzung) Vorbehandlung unterzogen werden, die den Zweck hat, daß Silazanharz unschmelzbar zu machen.

Nachfolgend wird die Erfindung anhand einiger Beispiele näher erläutert, ohne daß hierin eine Einschränkung zu sehen ist.

Beispiel 1

Darstellung von 1,1,1-Trichlor-3,3,3-trimethyldisilazan

Im 250 ml Dreihalskolben wurden 70 g Siliciumtetrachlorid (0,41 Mol) und 12,5 g Hexamethyldisilazan (0,08 Mol) zusammengegeben und 20 h bei Raumtemperatur gerührt. Die anschließende fraktionierende Destillation über eine kurze Vigreuxkolonne ergab 16,2 g (92 %) der farblosen Flüssigkeit 1,1,1-Trichlor-3,3,3-trimethyldisilazan.

Sdp. 70 °C/35 torr, $^1$H-NMR (CDCl$_3$) $\delta$ = 0,21 ppm, MS (EI)
m/z = 218 amu (M$^+$)

Beispiel 2

Darstellung von $\mu$-N,N'-Bis(trichlorsilylamino)-bis(dichloralan (I)

22,7 g AlCl$_3$ wurden bei Raumtemperatur in 100 ml Hexan vorgelegt. Anschließend wurden 38 g Verbindung (A) zügig unter Rühren zugegeben. Das Reaktionsgemisch wurde auf 40 °C aufgeheizt, wobei

das $AlCl_3$ langsam unter Auflösung mit dem Trimethyltrichlordisilazan reagiert. Nach 12-stündigem Rühren wurde die mittlerweile blanke Lösung auf Raumtempratur abgekühlt und das Hexan und das entstandene $ClSi(CH_3)_3$ abgezogen.

Zurück blieb ein kristallines Gemisch aus 80 % Verbindung I und 20 % Verbindung II.

Ausbeute: 46,2 g (85 % der Theorie)

Beispiel 3

Darstellung von Bis(trichlorsilylamino)chloralan (III)

a) 50 g (0,1 Mol) der Verbindung (I) wurden bei ca. 140°C und 0,1 mbar einer Temperaturbehandlung unterzogen. Die dabei auftretenden Zersetzungsprodukte $AlCl_3$ und Verbindung (III) wurden durch fraktionierte Sublimation getrennt. 28,6 g der kristallinen Verbindung (II) fielen in Form eines weißen Pulvers an. Dies entspricht einer Ausbeute von 79,9 % d.Th.

$^1$H-NMR: 4,15 ppm (NH)

MS: 358 $M^+$

b) 76 g (A) wurden zusammen mit 23 g $AlCl_3$ in Isooktan bei 100°C gekocht. Das sich bei der Reaktion bildende leicht flüchtige $SiCl(CH_3)_3$ wurde kontinuierlich abdestilliert.

Nach Beendigung der Reaktion und Abziehen des Lösungsmittels fielen 30,8 g Verbindung II in Form eines kristallinen Pulvers an.

Dies enspricht 86 % der Theorie.

Beispiel 4

Ammonolyse von $\mu$-N,N'-Bis(trichlorsilylamino)-bis-(dichloralan) (II)

In einen 500 ml Dreihalskolben wurden 200 ml (9 Mol) flüssiger Ammoniak (99,999 %) einkondensiert. Anschließend wurde unter starkem Rühren langsam (1 Tropfen/sec) eine Lösung von 50 g der Verbindung (I) in 100 ml Hexan bei einer Temperatur von -78°C zugetropft. Danach wurde die Suspension aus Imid, $NH_4Cl$ und flüssigem Ammoniak noch ca. 1 Stunde weitergerührt, um zu gewährleisten, daß sich möglichst viel Ammoniumchlorid in dem Ammoniak löst. Nach Abfiltrieren des Rückstandes wurde dieser noch 10 bis 20 mal mit flüssigem Ammoniak gewaschen, bis eine in Wasser zersetzte Probe des Imids bei Zugabe von Silbernitrat keine Trübung mehr aufwies.

Beispiel 5

Ammonolyse einer Mischung von Hexachlordisilazan ($Cl_3Si-NH-SiCl_3$) und $\mu$-N,N'-Bis(trichlorsilylamino)-bis-(dichloralan) (II)

In einen 500 ml-Dreihalskolben wurden ca. 200 ml (9 Mol) flüssiger Ammoniak (99,999 %) einkondensiert. Anschließend wurde unter starkem Rühren langsam (1 Tropfen/sec) eine Mischung von 5 g der Verbindung (II) und 57 g Hexachlordisilazan bei einer Temperatur von -78°C zugetropft. Dies entspricht einem (Si : Al)-Verhältnis von 10:1.

Danach wurde die Suspension aus polymerem Imid, $NH_4Cl$ und flüssigem Ammoniak noch ca. 1 Stunde weitergerührt, um zu gewährleisten, daß sich möglichst viel Ammoniumchlorid in dem Ammoniak löst. Nach Abfiltrieren des Rückstandes wurde dieser noch 10 bis 20 mal mit flüssigem Ammoniak gewaschen, bis eine in Wasser zersetzte Probe des Imids bei Zugabe von Silbernitrat keine Trübung mehr aufwies.

Beispiel 6

Darstellung einer Alumosilazanverbindung

100 ml Methylamin wurden in einem evakuierten 500 ml-Dreihalskolben mit 500 ml Tropftrichter ohne Druckausgleichsrohr bei -78°C einkondensiert. Anschließend wurden 10 g (40,0 mmol) Verbindung (I), gelöst in 250 ml Petrolether, unter starkem Rühren so zuggeben, daß die Innentemperatur nicht über -20°C anstieg. Der Feststoff, der im wesentlichen aus Methylaminhydrochlorid bestand, wurde mit einer Umkehrfritte abfiltriert. Von der klaren Petroletherlösung wurde das Lösungsmittel abgesaugt. Es blieb ein farbloses zähflüssiges Öl zurück (7 g).

$^1$H-NMR: $\delta$ NCH$_3$ = 2,0 ppm, Intensität: 10; $\delta$ NH = 0,2 ppm, Intensität: 2

$^{29}$Si-NMR: $\delta$ = -38 ppm

$^{13}$C-NMR: $\delta$ CH$_3$ = 27,3 ppm

IR: 3320 cm$^{-1}$ (NH-Streckschwingung), 2920 cm$^{-1}$, 2800 cm$^{-1}$, CH-Streckschwingung), 1550 cm$^{-1}$, 1460 cm$^{-1}$, 1050 cm$^{-1}$, 450 cm$^{-1}$

Beispiel 7

Darstellung eines Polyalumosilazans

5 g des aus Beispiel 6 erhaltenen Öls wurden in einem 50 ml-Kolben unter Schutzgas auf ca. 50°C erhitzt. Anschließend wurde gasförmiges Ammoniak mit einer Rate von 4 ml/min durch die Flüssigkeit geleitet. Es entstand innerhalb von 2 Stunden ein hochviskoses, wachsartiges, glasklares Polymer. Da die Methylaminogruppen partiell durch Imidgruppen ersetzt worden sind, wird die Intensität der CH-Banden im IR-Spektrum dieses Polymeren deutlich geringer als die Intensität der CH-Banden der Verbindung im Beispiel 6, während die Intensität der NH-Bande signifikant zunimmt.

Dieses Polymer wurde anschließend unter Stickstoff bei 1000°C pyrolysiert. Es entstand ein schwarzes Pulver mit einem Kohlenstoffgehalt von 9,4 %. Die Ausbeute an keramischem Material betrug ca. 70 %.

Beispiel 8

Umwandlung eines nach Beispiel 4 oder 5 erhaltenen Imids in ein amorphes Si-N-Al-N-Keramikpulver bzw. in ein kristallines Si$_3$N$_4$/AlN-Kompositpulver

Das, wie in Beispiel 4 beschrieben, erhaltene polymere Imid wurde in einem Röhrenofen im Ammoniakstrom auf 900°C erhitzt und bei dieser Temperatur ca. 30 min getempert, um evtl. noch vorhandene Spuren von NH$_4$Cl auszutreiben. Anschließend wurde das Material in einem Stickstoffstrom mit 10°C/min auf 1200°C aufgeheizt und dort für weitere 2 Stunden kalziniert. Da das polymere Imid sich vollständig zu einer nitridischen Keramik umgewandelt hat, weist das IR-Spektrum des so behandelten Materials keine NH-Banden mehr auf. Das erhaltene Pulver bleibt röntgenamorph. Die Umwandlung des amorphen Si-N-Al-N-Keramikpulvers zu einem kristallinen Si$_3$N$_4$/AlN-Komposit mit gleichmäßig mikroskopisch verteilten AlN-Partikeln in einer Siliciumnitridmatrix erfolgte durch 10-stündiges Tempern bei 1350°C.

**Patentansprüche**

1. Trichlorsilylaminoalane der Strukturformel

   (Cl$_3$Si-NH-AlClX)$_y$,

   wobei
   X = Cl und y = 2 (I) oder
   X = NH-SiCl$_3$ und y = 1 (II) bedeutet.

2. Verfahren zur Herstellung von (I) und (II), dadurch gekennzeichnet, daß 1,1,1-Trichlor-3,3,3-trimethyldis-ilazan mit AlCl$_3$ bei Temperaturen zwischen -100°C und 100°C umgesetzt und anschließend die Reaktionsmischung fraktioniert wird.

3. Verfahren zur Herstellung von (I) gemäß Anspruch 2, dadurch gekennzeichnet, daß das Verhältnis der Reaktanden 1,1,1-Trichlor-3,3,3-trimethyldisilazan zu AlCl$_3$ zwischen 10:1 und 1:10 beträgt.

4. Verfahren zur Herstellung von (II) gemäß Anspruch 2, dadurch gekennzeichnet, daß (Cl$_3$SiNHAlCl$_2$)$_2$ durch eine Temperaturbehandlung im Bereich von 30 und 300°C unter Abspaltung und Abtrennung von AlCl$_3$ zersetzt wird.

5. Verfahren zur Herstellung von (II) gemäß Anspruch 2, dadurch gekennzeichnet, daß 1,1,1-Trichlor-3,3,3-trimethyldisilazan in einem Lösungsmittel mit AlCl$_3$ bei Temperaturen zwischen 0°C und 100°C umgesetzt wird. Das Verhältnis der Reaktanden beträgt zwischen 1:10 und 10:1.

6. Alumosilazanverbindungen, dadurch gekennzeichnet, daß die Chloratome der Verbindungen (I) und (II) gemäß Anspruch 1 ganz oder teilweise durch Organylaminogruppen R, R'-N- substituiert sind, wobei R bzw. R' gleich oder verschieden sein können, Wasserstoff, $C_1$-$C_6$-Alkyl, Phenyl oder Vinyl bedeuten.

7. Verfahren zur Herstellung der Alumosilazanverbindungen oder gemäß Anspruch 6, dadurch gekennzeichnet, daß Verbindungen (I) und (II) gemäß Anspruch 1 mit mindestens 10 Mol eines Organylamins pro Mol Alumosilazan in einem Lösungsmittel bei Temperaturen von -80°C bis +300°C umgesetzt werden.

8. Oligo- oder Polyalumosilazanverbindungen, die das Strukturmerkmal [≡ Si-NH-Al = ]$_n$, dadurch gekennzeichnet, daß die erste Koordinationssphäre jedes Silicium- bzw. Aluminiumatoms nur aus Stickstoffatomen und/oder Chloratomen besteht, wobei jedes Stickstoffatom einen Rest R trägt, worin R = H, $C_1$-$C_6$-Alkyl, Vinyl oder Phenyl bedeutet und n Werte von größer als 2 annimmt.

9. Oligo- oder Polyalumosilazanverbindungen gemäß Anspruch 8, dadurch erhältlich, daß eine oder beide Verbindungen (I) und (II) mit Organylaminoverbindungen $R_2NH$ oder $RNH_2$ umgesetzt werden, wobei R $C_1$-$C_6$-Alkyl, Vinyl oder Phenyl bedeutet.

10. Oligo- oder Polyalumosilazanverbindungen gemäß Anspruch 8, dadurch erhältlich, daß Alumosilazanverbindungen gemäß Anspruch 5 durch thermische Polymerisation oder durch Umsetzung mit Ammoniak in offenen oder geschlossenen Systemen unter Normaldruck oder erhöhtem Druck bei Temperaturen zwischen -20°C und 300 erhalten werden.

11. Verfahren zur Herstellung eines Siliciumalumiumnitrid Keramikpulvers, dadurch gekennzeichnet, daß Verbindungen (I) und/oder (II) mit festem, flüssigem oder gasförmigem Ammoniak bei Temperaturen zwischen -200°C und +1400°C ammonolysiert und das entstehende Produkt in $N_2$, Argon und/oder $NH_3$ bei Temperaturen zwischen 600 und 1450°C calciniert werden.

12. Amorphes Siliciumalumiumnitrid Keramikpulver gemäß Anspruch 11, dadurch gekennzeichnet, daß in der Keramik Si-N-Al-N-Bindungen vorliegen und die Elemente Si, N und B zu mehr als 98 Gew.-% enthalten sind.

13. Kristallines Komposit-Keramikpulver aus $Si_3N_4$ und AIN, erhältlich durch Kristallisation des amorphen Siliciumalumiumnitrid Keramikpulvers gemäß Anspruch 12, dadurch gekennzeichnet, daß das $Si_3N_4$ und das AIN in molekulardisperser Verteilung vorliegen.

14. Verfahren zur Herstellung eines amorphen Sialonkeramikpulvers, dadurch gekennzeichnet, daß das Siliciumalumiumnitrid-Keramikpulver gemäß Anspruch 12 bei Temperaturen zwischen 20°C und 200°C für einen Zeitraum zwischen 10 Minuten und 10 Stunden mit feuchter Luft in Kontakt gebracht wird.

15. Amorphes Sialonkeramikpulver gemäß Anspruch 14, dadurch gekennzeichnet, daß sich der Sauerstoff nur an der Oberfläche des Keramikpulvers befindet und die Elemente Si, N, Al und O zu mehr als 98 Gew.-% enthalten kann.

16. Verfahren zur Herstellung von keramischem Material, dadurch gekennzeichnet, daß oligomere oder polymere Alumosilazanverbindungen gemäß einem oder mehreren der Ansprüche 8 bis 10 in inerter oder $NH_3$-haltiger Atmosphäre bei Temperaturen von 800°C - 1800°C pyrolysiert werden.

17. Keramisches Material gemäß Anspruch 16, dadurch gekennzeichnet, daß in der Keramik N-Si-N-Al-N-Bindungssequenzen vorliegen, und die Elemente Si, N, Al und C zu mehr als 98 Gew.-% enthalten sind.

18. Verwendung der Oligo- oder Polyalumosilazane gemäß einem oder mehreren der Ansprüche 8 bis 10 zur Herstellung von keramischen Fasern, keramischen Beschichtungen und keramischen Formkörpern.

19. Verwendung der Siliciumaluminium-Keramikpulver gemäß einem oder mehreren der Ansprüche 12, 13, 15 und 17 zur Herstellung von keramischen Formkörpern.

20. Verwendung der Siliciumaluminiumnitrid-Keramikpulver gemäß einem oder mehreren der Ansprüche 12, 13, 15 und 17 als Sinterhilfsmittel für die Sinterung von nichtoxidischem Keramikmaterial.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | EP-A-0 502 399 (BAYER AG)<br>* das ganze Dokument *<br>--- | 1-20 | C07F7/02<br>C04B35/58<br>C08G79/10<br>C08G77/62 |
| Y | CHEMICAL ABSTRACTS, vol. 112, no. 18,<br>30. April 1990, Columbus, Ohio, US;<br>abstract no. 163709h,<br>RIEDEL, R. ET AL. 'CHARACTERIZATION OF<br>ALUMINUM NITRIDE POWDER PRODUCED BY THE<br>REACTION OF ALUMINUM CHLORIDE WITH<br>HEXAMETHYLDISILAZANE'<br>Seite 334 ;<br>* Zusammenfassung *<br>& J. MATER. SCI. LETT.<br>Bd. 9, Nr. 2 , 1990<br>Seiten 222 - 224<br>--- | 1-20 | |
| Y | EP-A-0 305 985 (WACKER-CHEMIE GMBH)<br>* das ganze Dokument *<br>--- | 1-20 | |
| A | US-A-4 767 607 (SCHLEICH, D.M.)<br>* das ganze Dokument *<br>--- | 1-20 | **RECHERCHIERTE SACHGEBIETE (Int.Cl.5)** |
| A | CHEMICAL ABSTRACTS, vol. 113, no. 20,<br>12. November 1990, Columbus, Ohio, US;<br>abstract no. 183665q,<br>PACIOREK, K.J.L. ET AL. 'SYNTHESIS AND<br>REACTIONS OF<br>(BIS(TRIMETHYLSILYL)AMIDO)ALUMINUM<br>COMPOUNDS'<br>Seite 785 ;<br>* Zusammenfassung *<br>& INORG. CHEM.<br>Bd. 29, Nr. 21 , 1990<br>Seiten 4252 - 4255<br>--- | 1,11 | C07F<br>C04B<br>C08G |

-/--

Der vorliegende Recherchenbericht wurde für alle Patentansprüche erstellt

| Recherchenort | Abschlußdatum der Recherche | Prüfer |
|---|---|---|
| DEN HAAG | 11. Februar 1994 | Rinkel, L |

EPO FORM 1503 03.82 (P04C03)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | CHEMICAL ABSTRACTS, vol. 115, no. 20, 18. November 1991, Columbus, Ohio, US; abstract no. 213469q, KAJIWARA, N. ET AL. 'MANUFACTURE OF ALUMINUM NITRIDE AND CYCLOALAZANES AND THEIR POLYMERS FOR THE MANUFACTURE' Seite 355 ; * Zusammenfassung * & JP-A-03 093 669 (TOKAI RUBBER INDUSTRIES, LTD.) --- | 1,11 | |
| A | EP-A-0 495 325 (ATOCHEM) * das ganze Dokument * --- | 1,8,11 | |
| A | EP-A-0 344 870 (TOA NENRYO KOGYO KABUSHIKI KAISHA) * das ganze Dokument * --- | 1,8,11 | |
| A | EP-A-0 167 306 (DOW CORNING CORPORATION) * das ganze Dokument * --- | 1,11 | |
| A | EP-A-0 434 428 (SHIN-ETSU CHEMICAL CO., LTD.) * das ganze Dokument * ----- | 1,11 | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 11. Februar 1994 | Rinkel, L |